(19) Europäisches Patentamt
European Patent Office
Office européen des brevets

(11) **EP 2 336 228 B1**

(12) **EUROPÄISCHE PATENTSCHRIFT**

(45) Veröffentlichungstag und Bekanntmachung des Hinweises auf die Patenterteilung:
**29.03.2017   Patentblatt 2017/13**

(51) Int Cl.:
***C08K 3/04*** *(2006.01)*

(21) Anmeldenummer: **10188805.5**

(22) Anmeldetag: **26.10.2010**

(54) **Kautschukmischung**

Rubber compound

Mélange de caoutchouc

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2009   DE 102009047175**

(43) Veröffentlichungstag der Anmeldung:
**22.06.2011   Patentblatt 2011/25**

(73) Patentinhaber: **Orion Engineered Carbons GmbH 60528 Frankfurt am Main (DE)**

(72) Erfinder:
• **Fröhlich, Joachim
  92318, Neumarkt (DE)**
• **Messer, Paul Dieter
  50321, Brühl (DE)**
• **Warskulat, Michael
  53332, Bornheim (DE)**
• **Molinari, Luis
  48100, Ravenna (RA) (IT)**
• **Vitali, Vanni
  47023, Cesana (FC) (IT)**

(74) Vertreter: **f & e patent
Fleischer, Engels & Partner mbB, Patentanwälte
Braunsberger Feld 29
51429 Bergisch Gladbach (DE)**

(56) Entgegenhaltungen:
EP-A1- 0 533 015       EP-A1- 0 845 712
WO-A2-2008/058114

EP 2 336 228 B1

**Beschreibung**

Die Erfindung betrifft eine Kautschukmischung.

Kautschukmischungen enthalten üblicherweise verstärkende Füllstoffe zur Verbesserung der mechanischen Eigenschaften der aus ihnen hergestellten Elastomererzeugnisse. In sehr vielen Fällen kommen industriell hergestellte Ruße als Verstärkerfüllstoff zur Anwendung. Industriell hergestellte Ruße werden erzeugt durch die Pyrolyse von Kohlenwasserstoffen bei hohen Temperaturen unter kontrollierten Prozessbedingungen. Bei diesen Bedingungen bilden sich Spuren von polyzyklischen aromatischen Kohlenwasserstoffen ("polyaromatic hydrocarbons", auch PAH genannt) auf der Rußoberfläche.

Einige PAHs haben ein gesundheitsschädliches Potential. PAHs in Rußen sind zwar fest auf der Rußoberfläche gebunden und sind deshalb biologisch nicht verfügbar (Borm PJ, et. al., Formation of PAH-DNA adducts after in vivo and vitro exposure of rats and lung cells to different commercial carbon blacks, Toxicology and Applied Pharmacology, 2005 June 1; 205(2): 157-167.). Trotzdem gibt es Bestrebungen sowohl seitens der EU-Behörden als auch von Anwendern, den PAH Gehalt in industriell hergestellten Rußen zu reduzieren. Beispiele hierfür sind:

- EU Direktive 2007/19/EC, welche die Regeln für Kunststoffe und Gegenstände, die mit Lebensmitteln in Kontakt kommen, behandelt. Die Direktive schreibt eine Höchstgrenze für den Benzo(a)pyrene Gehalt von Ruß von 0,25 mg/kg fest. Vor Inkrafttreten dieser Direktive gab es keine PAH-Höchstgrenze für Ruße.

- EU Direktive 2005/69/EC, die den Gehalt von PAHs in Extenderölen zu Herstellung von Fahrzeugreifen behandelt. Diese Direktive reguliert nicht direkt den PAH-Gehalt von Rußen; jedoch hatte die EU die Beschränkung des PAH Gehaltes in Extenderölen für die Verwendung zur Reifenherstellung beschlossen, um die gesamten jährlichen Emissionen von PAHs entsprechend dem POP Protokoll unter der UNECE - Konvention über weiträumige grenzüberschreitende Luftverunreinigung (CLRTAP) von 1998 zu verringern.

Diese Beispiele zeigen, dass es einen allgemeinen Trend gibt, den PAH Gehalt in polymeren Materialien und damit auch in Kautschukmischungen zu reduzieren. Dementsprechend gibt es auch einen allgemeinen Trend, den PAH Gehalt der in diesen Materialien verwendeten Inhaltsstoffe, wie z.B. von Rußen, zu verringern. Als Leitgröße für den PAH Gehalt von Rußen wird unter anderem der Gehalt an Benzo(a)pyrene - im folgenden auch kurz als BaP bezeichnet - verwendet.

In gewissem Rahmen ist der PAH-Gehalt bereits während der Herstellung, zum Beispiel bei Furnacerußen im Reaktor, beeinflussbar. Durch hohe Temperaturen und/oder spätes Quenchen können PAH-Gehalte von zum Beispiel 100-150 ppm auf 25-40 ppm reduziert werden (US 4138471).

Wenn es jedoch durch die Reaktorfahrweise nicht gelingt, besonders geringe PAH-Gehalte zu erreichen, können zur Entfernung vorhandener PAH die Ruße nachbehandelt werden. Es ist bekannt, dass die polykondensierten aromatischen Kohlenwasserstoffe auf Ruß durch thermische Behandlung von geperltem Furnace-Ruß in einem Fließbett bei Anwesenheit von mindestens 10% Sauerstoff reduziert werden (US 4,138,471). Dabei können für die Verbindungen Benzo (a) pyren, Dibenz (a, h) anthrazen oder 7,12-Dimethylbenz(a)anthrazen, Mengen von jeweils unter 2 ppb erreicht werden.

Ferner ist bekannt, die polykondensierten aromatischen Kohlenwasserstoffe auf Kohlenstoffnanomaterialien durch Extraktion mit einem Lösungsmittel zu erniedrigen (WO 03/021017).

Weiter ist ein Toner bekannt (US 6,440,628), der unter anderem Ruß mit weniger als 10 ppm PAH-Gehalt, bezogen auf Naphthalen, Acenaphtylen, Acenaphthen, Fluoren, Phenanthren, Anthrazen, Fluoranthen, Pyren, Benzo(a)anthrazen, Chrysen, Benzo(b)fluoranthen, Benzo(a)pyren, Benzo(k,j)fluoranthen, Dibenzo(a,h)anthrazen, Indeno (1, 2, 3-cd) pyren und Benzo(g,h,l)perylen, enthält.

Des weiteren sind Kautschukmischungen bekannt, enthaltend einen Ruß mit einer spezifischen Oberfläche von 13-19 $m^2$/g und 0,25-0,28 Gew.-% polykondensierte aromatische Kohlenwasserstoffe (SU 899589) beziehungsweise einen Ruß mit einer spezifischen Oberfläche von 50-57 $m^2$/g und 0,21-0,23 Gew.-% polyaromatische Kohlenwasserstoffe (SU 899589).

Weiter ist aus EP 1102127 ein Toner bekannt, der einen Ruß mit weniger als 15 ppm PAH-Gehalt, beispielsweise Verbindungen wie Benzpyren, Anthrazen-benzopyren, Phenanthren, Pyren und ähnliche enthält.

Außerdem ist aus US 6,087,434 eine Pigmentpräparation bekannt, die einen Ruß mit weniger als 10 ppm PAH-Gehalt, beispielsweise Verbindungen wie Naphthalen, Fluoren, Fluoranthen, Pyren, Chrysen, Benzopyrene und ähnliche, enthält und einen spezifischen Sauerstoffgehalt von 0,2 - 0,4 mg/$m^2$ aufweist.

Es sind zusätzlich medizinisches Kontrastmittel aus US 6,599,496 bekannt, die ein Kohlenstoffpigment enthalten, dessen PAH-Gehalt unter 0,5 ppm angegeben wird.

In WO 2008/058114 sind Ruße beschrieben, deren PAH-Gehalt durch thermische Behandlung oder Extraktion auf Werte von 1-20 ppm oder auf Werte ≤10 ppm gesenkt werden konnten.

Einerseits steigt zwar die Nachfrage nach Kautschukmischungen mit Inhaltsstoffen, die einen verringerten PAH Gehalt aufweisen. Andererseits muss aber auch sichergestellt sein, dass diese Kautschukmischungen im Gebrauch nicht zu qualitativen Nachteilen, zum Beispiel bei den mechanischen Eigenschaften oder des Dispersionsverhaltens des enthaltenen Füllstoffs, führen. Deshalb ist es wünschenswert, Kautschukmischungen mit PAH-armen Rußen zur Verfügung zu stellen, welche keine anwendungstechnischen Nachteile gegenüber Kautschukmischungen, welche standardmäßig verfügbare Ruße enthalten, aufweisen.

Aufgabe der vorliegenden Erfindung ist es, eine Kautschukmischung zur Verfügung zu stellen, welche einen PAH-armen Ruß enthält und gleichzeitig in der Gummianwendung gute Endeigenschaften und verbesserte Dispersionseigenschaften aufweist gegenüber einem Standardruß mit nicht abgesenktem PAH-Gehalt.

Gegenstand der Erfindung ist eine Kautschukmischung, enthaltend mindestens einen Kautschuk und mindestens einen PAH-armen Ruß, welche dadurch gekennzeichnet ist, dass der PAH-arme Ruß

(A) eine Iod-Zahl von 17 bis 75 mg/g, vorzugsweise von 35 bis 70 mg/g, besonders bevorzugt von 40 bis 55 mg/g,
(B) eine STSA-Oberfläche von 36 bis 64 m$^2$/g, bevorzugt von 36 bis 50 m$^2$/g,
(C) ein Verhältnis Iod-Zahl zu STSA-Oberfläche von > 1,06 mg/m$^2$, vorzugsweise > 1,08 mg/m$^2$, besonders bevorzugt > 1,12 mg/m$^2$, ausserordentlich bevorzugt > 1,15 mg/m$^2$,
(D) eine OAN-Zahl von 60 bis 160 ml/100g, vorzugsweise von 70 bis 140 ml/100g, besonders bevorzugt von 110 bis 132 ml/100g,
(E) eine COAN-Zahl von 40 bis 110 ml/100g, vorzugsweise von 60 bis 100 ml/100g, besonders bevorzugt von 70 bis 95 ml/100g,
(F) einen Mode größer als 100 nm, vorzugsweise größer als 150 nm, besonders bevorzugt größer als 160 nm, und
(G) einen Benzo(a)pyrene Gehalt < 2 ppm, vorzugsweise < 1 ppm, besonders bevorzugt < 0,5 ppm, ganz besonders bevorzugt < 0,1 ppm, ausserordentlich bevorzugt < 0,05 ppm, aufweist.

Als Kautschuk in den erfindungsgemäßen Kautschukmischungen können neben Naturkautschuk auch Synthesekautschuke eingesetzt werden. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR),

- Polyisopren (IR),

- Styrol/Butadien-Copolymerisate, beispielsweise Emulsions-SBR (E-SBR) oder Lösungs-SBR (L-SBR), vorzugsweise mit einem Styrolgehalt von 1 bis 60 Gew.-%, besonders bevorzugt 2 bis 50 Gew.-%, bezogen auf das Gesamtpolymer,

- Chloropren (CR),

- Isobutylen/Isopren-Copolymerisate (IIR), sowie halogenierte Varianten,

- Butadien/Acrylnitril-Copolymere, vorzugsweise mit einem Acrylnitrilgehalt von 5 bis 60 Gew.-%, vorzugsweise 10 bis 50 Gew.-%, bezogen auf das Gesamtpolymer (NBR),

- teilhydrierter oder vollständig hydrierter NBR-Kautschuk (HNBR),

- Ethylen/Propylen/Dien-Copolymerisate (EPDM),

- Ethylen/Propylen-Copolymerisate (EPM),

- Fluorkautschuk (FKM, FPM),

- Acrylatkautschuk (ACM),

- Silikonkautschuk (Q),

- Chlorsulfoniertes Polyethylen (CSM),

- Ethylen-Vinylacetat-Copolymere (EVM),

- oben genannte Kautschuke, die zusätzlich funktionelle Gruppen besitzen, wie zum Beispiel Carboxy- , Silanoloder Epoxygruppen, beispielsweise Epoxidierter NR, Carboxy-funktionalisierter NBR oder Silanol- (-SiOH) bzw. Siloxy-funktionalisierter (-Si-OR) SBR,

sowie Mischungen dieser Kautschuke.

Die erfindungsgemäßen Kautschukmischungen können bevorzugt Naturkautschuk oder SBR-Kautschuk und gegebenenfalls Mischungen mit Dienkautschuken enthalten.

Die erfindungsgemäßen Kautschukmischungen für die Verwendung in LKW-Reifenlaufflächen können Naturkautschuk sowie dessen Mischung mit Dienkautschuken enthalten.

Die erfindungsgemäßen Kautschukmischungen für die Verwendung in PKW-Reifenlaufflächen können SBR-Kautschuk sowie dessen Mischung mit anderen Dien-Kautschuken enthalten.

Die erfindungsgemäßen Kautschukmischungen für die Verwendung als Komponenten für den Reifenunterbau können SBR-Kautschuk, Butadien-Kautschuk oder Naturkautschuk sowie deren Mischungen mit anderen Dien-Kautschuken enthalten.

Die erfindungsgemäßen Kautschukmischungen für die Verwendung in Profilen können EPD(M)-Kautschuk sowie dessen Mischung mit anderen Kautschuken enthalten.

Der PAH-arme Ruß kann in Mengen von 10 bis 300 phr (parts per hundred rubber), bevorzugt 20 bis 200 phr, besonders bevorzugt 30 bis 160 phr, ganz besonders bevorzugt 30 bis 100 phr, bezogen auf die Gesamtmenge des eingesetzten Kautschuks, eingesetzt werden.

Die Iodzahl wird nach ASTM D 1510 gemessen.

Die STSA-Oberfläche wird nach ASTM D 6556 gemessen.

Die OAN-Zahl wird nach ASTM D 2414, mit folgenden Parametern: Öl: Paraffin, Methode zur Endpunktbestimmung: Prozedur A, gemessen.

Die COAN-Zahl wird nach ASTM D 3493-06 gemessen, mit folgendem Parameter: Öl: Paraffin.

Der Mode wird aus der Aggregatgrößenverteilung berechnet.

Die Aggregatgrößenverteilung wird dabei nach der Norm ISO 15825, first edition, 2004-11-01, bestimmt, wobei folgende Modifikationen angewendet werden:

Ergänzung in Absatz 4.6.3 der Norm ISO 15825: Der mode bezieht sich auf die Massenverteilungskurve (mass distribution curve).

Ergänzung in Absatz 5.1 der Norm ISO 15825: Es wird das Gerät BI-DCP Particle Sizer und die zugehörige Auswertesoftware dcplw32, Version 3.81, verwendet, alles erhältlich bei der Firma Brookhaven Instruments Corporation, 750 Blue Point Rd., Holtsville, NY, 11742.

Ergänzung zu Absatz 5.2 der Norm ISO 15825: Es wird das Ultraschall-Steuergerät GM2200, der Schallwandler UW2200, sowie die Sonotrode DH13G verwendet. Ultraschall Steuergerät, Schallwandler und Sonotrode sind erhältlich bei der Firma Bandelin electronic GmbH & Co. KG, Heinrichstraße 3-4, D-12207 Berlin. Dabei werden am Ultraschall-Steuergerät folgende Werte eingestellt: Power % = 50, Cycle = 8. Dies entspricht einer eingestellten Nennleistung von 100 Watt und einem eingestellten Puls von 80%.

Ergänzung zu Absatz 5.2.1 der Norm ISO 15825: Die Ultraschallzeit wird auf 4,5 Minuten festgelegt.

Abweichend zu der im Absatz 6.3 der Norm ISO 15825 angegebenen Definition wird "Surfactant" wie folgt definiert: "Surfactant" ist ein anionisches Tensid vom Typ Nonidet P 40 Substitute von der Firma Fluka, erhältlich bei Sigma-Aldrich Chemie GmbH, Industriestrasse 25, CH-9471 Buchs SG, Switzerland.

Abweichend zu der im Absatz 6.5 der Norm ISO 15825 angegebenen Definition der Spinflüssigkeit ist die Spinflüssigkeit wie folgt definiert: Zur Herstellung der Spinflüssigkeit werden 0,25 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Spinflüssigkeit darf nach deren Herstellung höchstens 1 Woche verwendet werden.

Abweichend zu der im Absatz 6.6 der Norm ISO 15825 angegebenen Definition der Dispersionsflüssigkeit ist die Dispersionsflüssigkeit wie folgt definiert: Zur Herstellung der Dispersionsflüssigkeit werden 200 ml Ethanol (Absatz 6.2), und 0,5 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Dispersionsflüssigkeit darf nach deren Herstellung höchstens 1 Woche verwendet werden.

Ergänzung zu Absatz 7 der Norm ISO 15825: Es wird ausschließlich geperlter Ruß verwendet.

Die Anweisungen in den Absätzen 8.1, 8.2, 8.3 der Norm ISO 15825 werden zusammenfassend durch folgende Anweisung ersetzt: Der geperlte Ruß wird in einem Achatmörser leicht zerdrückt. 20 mg Ruß werden dann in einem 30 ml Rollrandfläschchen (Durchmesser 28 mm, Höhe 75 mm, Wanddicke 1,0 mm) mit 20 ml Dispersionslösung (Absatz 6.6) versetzt und in einem Kühlbad (16°C +/- 1°C) für die Dauer von 4,5 Minuten (Absatz 5.2.1) mit Ultraschall (Absatz 5.2) behandelt und damit in der Dispersionslösung suspendiert. Nach der Ultraschall-Behandlung wird die Probe binnen 5 Minuten in der Zentrifuge gemessen.

Ergänzung zu Absatz 9 der Norm ISO 15825: Der Wert für die einzutragende Dichte von Ruß beträgt 1,86 g/cm$^3$. Die Temperatur für die einzutragende Temperatur wird gemäß Absatz 10.11 bestimmt. Für den Typ der Spinflüssigkeit wird die Option "Aqueous" ausgewählt. Damit ergibt sich für die Dichte der Spinflüssigkeit ein Wert von 0,997 (g/cc), und für die Viskosität der Spinflüssigkeit ein Wert von 0,917 (cP). Die Lichtstreukorrektur erfolgt mit den in der Software dcplw 32 anwählbaren Optionen: Datei = carbon.prm; Mie-Correction.

Ergänzung zu Absatz 10.1 der Norm ISO 15825: Die Zentrifugengeschwindigkeit ist auf 11000 r/min festgelegt.

Ergänzung zu Absatz 10.2 der Norm ISO 15825: Anstatt 0,2 cm$^3$ Ethanol (Absatz 6.2) werden 0,85 cm$^3$ Ethanol (Absatz 6.2) injiziert.

Ergänzung zu Absatz 10.3 der Norm ISO 15825: Es werden exakt 15 cm$^3$ Spinflüssigkeit (Absatz 6.5) injiziert. Anschließend werden 0,15 cm$^3$ Ethanol (Absatz 6.2) injiziert.

Die Anweisung Absatz 10.4 der Norm ISO 15825 entfällt komplett.

Ergänzung zu Absatz 10.7 der Norm ISO 15825: Unmittelbar nach dem Start der Datenaufzeichnung überschichtet man die Spinflüssigkeit in der Zentrifuge mit 0,1 cm$^3$ Dodecan (Absatz 6.4).

Ergänzung zu Absatz 10.10 der Norm ISO 15825: Für den Fall, dass die Messkurve die Basislinie nicht binnen einer Stunde wieder erreicht, wird die Messung genau nach 1 Stunde Messdauer abgebrochen. Es erfolgt kein Neustart bei einer geänderten Zentrifugendrehzahl.

Ergänzung zu Absatz 10.11 der Norm ISO 15825: Anstelle der in der Anweisung beschriebenen Methode zur Ermittlung der Messtemperatur wird die Messtemperatur T, welche in das Computerprogramm einzutragen ist, wie folgt ermittelt:

$$T = 2/3 \ (Te - Ta) + Ta,$$

wobei Ta die Temperatur der Messkammer vor der Messung und Te die Temperatur der Messkammer nach der Messung bezeichnet. Die Temperaturdifferenz sollte 4° C nicht übersteigen.

Der Benzo(a)pyrene (BaP) Gehalt wird dabei nach folgender Methode ermittelt, welche die Bestimmung von insgesamt 22 PAHs beschreibt: "Determination of PAH content of carbon black; Docket Nr. 95F-0163; Datum: 8. Juli 1994; Methode eingereicht durch Cabot Corporation, 75 State Street, Boston, MA; erhältlich bei dem Office of Premarket Approval Center for Food Safety and Applied Nutrition (HFS-200), Food and Drug Administration, 200"C" Street S.W., Washington, D.C. 20204".

Die Transmission bei einer Wellenlänge von 300nm kann dabei > 45% und < 98%, vorzugsweise > 45% und < 95%, besonders bevorzugt > 45% und < 90%, sein.

Die Transmission bei einer Wellenlänge von 300nm wird bestimmt nach ASTM D 1618-04, wobei die Auswertung bei einer Wellenlänge von 300 nm anstatt der üblichen 425 nm erfolgt.

Der PAH-arme Ruß kann ein Gasruß, Flammruß, Plasmaruß, Thermalruß oder bevorzugt ein Furnaceruß sein.

Der PAH-arme Ruß kann nicht oberflächenmodifiziert und nicht nachbehandelt sein.

Der pH-Wert des PAH-armen Rußes kann > 5, vorzugsweise > 8, sein.

Der pH-Wert wird dabei bestimmt nach ASTM D 1512.

Die erfindungsgemäße Kautschukmischung kann Kieselsäure, vorzugsweise gefällte Kieselsäure, enthalten.

Die erfindungsgemäße Kautschukmischung kann Organosilane, beispielsweise Bis(triethoxysilylpropyl)polysulfid oder (Mercaptoorganyl)alkoxysilane, enthalten.

Die erfindungsgemäße Kautschukmischung kann Kautschukhilfsstoffe enthalten.

Die erfindungsgemäße Kautschukmischung kann weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Diphenylguanidin, Triethanolamin, Polyethylenglykol, Alkoxyterminiertes Polyethylenglykol oder Hexantriol, die der Kautschukindustrie bekannt sind.

Die Kautschukhilfsstoffe können in üblichen Mengen, die sich unter anderem nach dem Verwendungszweck richten, eingesetzt werden. Übliche Mengen können zum Beispiel Mengen von 0,1 bis 50 phr bezogen auf Kautschuk sein.

Als Vernetzer können Schwefel, organische Schwefelspender oder Radikalbildner dienen.

Die erfindungsgemäßen Kautschukmischungen können darüber hinaus Vulkanisationsbeschleuniger enthalten.

Beispiele für geeignete Vulkanisationsbeschleuniger können Mercaptobenzthiazole, Sulfenamide, Guanidine, Thiurame, Dithiocarbamate, Thioharnstoffe und Thiocarbonate sein.

Die Vulkanisationsbeschleuniger und Vernetzer können in Mengen von 0,1 bis 10 phr, bevorzugt 0,1 bis 5 phr, bezogen auf Kautschuk, eingesetzt werden.

Die Abmischung der Kautschuke mit dem Füllstoff, gegebenenfalls Kautschukhilfsstoffen und gegebenenfalls den Organosilanen kann in üblichen Mischaggregaten, wie Walzen, Innenmischern und Mischextrudern, durchgeführt werden. Üblicherweise können solche Kautschukmischungen im Innenmischer hergestellt werden, wobei zunächst in einer oder mehreren aufeinanderfolgenden thermomechanischen Mischstufen die Kautschuke, der Ruß, gegebenenfalls die Kieselsäure und gegebenenfalls die Organosilane und die Kautschukhilfsstoffe bei 100 bis 180°C eingemischt werden. Dabei können sich die Zugabereihenfolge und der Zugabezeitpunkt der Einzelkomponenten entscheidend auf die erhaltenen Mischungseigenschaften auswirken. Die so erhaltene Kautschukmischung kann dann üblicherweise in einem Innenmischer oder auf einer Walze bei 40-130°C, bevorzugt 50 - 120°C, mit den Vernetzungschemikalien versetzt und zur sogenannten Rohmischung für die nachfolgenden Prozessschritte, wie zum Beispiel Formgebung und Vulkanisation, verarbeitet werden.

Die Vulkanisation der erfindungsgemäßen Kautschukmischungen kann bei Temperaturen von 80 bis 230°C, bevorzugt 130 bis 200°C, gegebenenfalls unter Druck von 2 bis 200 bar erfolgen.

Die erfindungsgemäßen Kautschukmischungen können zur Herstellung von Formkörpern oder Extrudaten, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen, Profilen und Dämpfungselementen, eingesetzt werden.

Die erfindungsgemäße Kautschukmischung hat den Vorteil, dass sie einerseits einen PAH-armen Ruß als Inhaltsstoff enthält, andererseits aber gute mechanische Eigenschaften aufweist beziehungsweise zu hervorragenden anwendungstechnischen Eigenschaften im fertigen Vulkanisat führt. Darüberhinaus weist die erfindungsgemäße Kautschukmischung eine sehr gute Dispersion des PAH-armen Rußes auf.

## Beispiele

Die rußanalytischen Kenndaten der verwendeten Ruße sind in Tabelle 1 aufgeführt.

Tabelle 1

| Ruß | | Ruß A | Ruß B |
|---|---|---|---|
| Iodzahl | mg/g | 42,6 | 43,8 |
| STSA | $m^2/g$ | 40,1 | 37,6 |
| Iodzahl/STSA | $mg/m^2$ | 1,06 | 1,16 |
| OAN | ml/100g | 119,0 | 124,5 |
| COAN | ml/100g | 83, 9 | 82,2 |
| Transmission 300nm | % | 26,3 | 85,0 |
| Mode | nm | 162 | 171 |
| Benzo(a)pyren | ppm | 2,83 | 0,03 |

Bei dem Ruß A handelt es sich um Corax® N 550 von Evonik Degussa GmbH. Bei dem Ruß B handelt es sich um EB542RP von Evonik Degussa GmbH.

Beispiel 1 (Kautschukmischung auf Basis Naturkautschuk)

Die für die Naturkautschukmischungen verwendete Rezeptur ist in der folgenden Tabelle 2 angegeben. Dabei bedeutet die Einheit phr Gewichtsteile, bezogen auf 100 Teile des eingesetzten Rohkautschuks.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 2:

| | phr |
|---|---|
| **Stufe 1** | |
| SMR 10 ML4=60-70 | 100,0 |
| Ruß | 52,0 |

(fortgesetzt)

| | phr |
|---|---|
| **Stufe 1** | |
| Stearinsäure | 3,0 |
| ZnO | 3,0 |
| Vulkanox® 4020 | 1,0 |
| Vulkanox® HS | 1,0 |
| Protektor G3108 | 1,0 |
| | |
| **Stufe 2** | |
| Batch Stufe 1 | |
| Schwefel | 1,5 |
| Rhenogran® TBBS-80 | 1,2 |

Bei dem Naturkautschuk SMR10 ML4 = 60-70 handelt es sich um SMR10, welcher vor dem Einmischprozess nach den üblichen Verfahren auf einem Walzwerk mastiziert wird und nach dem Mastizieren mindestens 24 Stunden, höchstens jedoch 1 Woche bei Raumtemperatur zwischengelagert wird. Der ML 1+4 (100°C)-Wert des mastizierten SMR10 liegt dabei in einem Bereich von 60-70. Der ML 1+4 - Wert wird gemessen nach DIN 53523/3.

Bei Vulkanox® 4020 handelt es sich um das Alterungsschutzmittel 6PPD der Firma Lanxess AG. Bei Vulkanox® HS handelt es sich um das Alterungsschutzmittel TMQ der Firma Lanxess AG. Protektor® G3108 ist ein Ozonschutzwachs der Firma Paramelt B.V.. Rhenogran® TBBS-80 ist ein Vulkanisationsbeschleuniger von Typ TBBS, der 80% Wirkstoff enthält, von Rhein-Chemie GmbH.

Die Kautschukmischungen werden in einem Innenmischer entsprechend der Mischvorschrift in Tabelle 3 hergestellt.

Tabelle 3

| **Stufe 1** | |
|---|---|
| *Einstellungen* | |
| Mischaggregat | Werner und Pfleiderer GK 1,5N |
| Drehzahl | 65 upm |
| Stempeldruck | 5,5 bar |
| Leervolumen | 1,6 l |
| Füllgrad | 0,70 |
| Durchflusstemperatur | 70 °C |
| | |
| *Mischvorgang* | |
| 0 bis 1 min | Naturkautschuk |
| 1 bis 2 min | 1/2 Ruß |
| 2 bis 5 min | 1/2 Ruß, Stearinsäure, ZnO, Vulkanox, Protektor |
| 5 min | säubern |
| 5 bis 6 min | mischen und ausfahren |
| | |
| Batchtemperatur | 145 - 155°C |

(fortgesetzt)

| Stufe 1 | |
|---|---|
| Lagerung | 24 h bei Raumtemperatur |
| | |
| **Stufe 2** | |
| *Einstellungen* | |
| Mischaggregat | Werner und Pfleiderer GK 1,5N |
| Drehzahl | 40 upm |
| Stempeldruck | 5,5 bar |
| Leervolumen | 1,6 l |
| Füllgrad | 0, 68 |
| Durchflusstemperatur | 60 °C |
| | |
| *Mischvorgang* | |
| 0 bis 2 min | Batch Stufe 1, Schwefel, TBBS-80 |
| | |
| Batchtemperatur | 100 - 110°C |
| | |
| 2 min | ausfahren und auf Labormischwalzwerk Troester WNU 1 |
| | (Durchmesser 150 mm, Länge 350 mm, |
| | Durchflusstemperatur 40/50°C, UPM 17/21) |
| | Fell bilden |
| | Homogenisieren: |
| | 3* links, 3* rechts einschneiden und umklappen sowie |
| | 3* bei weitem Walzenspalt (6 mm) und |
| | 3* bei engem Walzenspalt (3 mm) stürzen |
| | Fell ausziehen. |
| | |
| Batchtemperatur | < 110°C |

In Tabelle 4 sind die Methoden für die Gummitestung zusammengestellt.

Tabelle 4

| Physikalische Testung / Bedingungen | Norm |
|---|---|
| Zugversuch am Ring 1 / Stab 2, 23°C<br>    Zugfestigkeit (MPa)<br>    Spannungswert bei 100% Dehnung (MPa)<br>    Spannungswert bei 300% Dehnung (MPa)<br>    Bruchdehnung (%) | DIN 53504, ISO 37 |
| Goodrich-Flexometertest,<br>0,175 inch Hub, 2 h, 23 °C<br>    Einstichtemperatur (°C) | DIN 53533, ASTM D 623 A |

(fortgesetzt)

| Physikalische Testung / Bedingungen | Norm |
|---|---|
| Shore Härte, 23°C<br>Shore A | DIN 53505 |

Methode zur Bestimmung der Dispersion:

Der Dispersionskoeffizient wird mittels der OberflächenTopographie incl. Medaliakorrektur bestimmt ([A. Wehmeier, "Filler Dispersion Analysis by Topography Measurements" Technical Report TR 820, Degussa AG, Advanced Fillers and Pigments Division], ["Entwicklung eines Verfahrens zur Charakterisierung der Füllstoffdispersion in Gummimischungen mittels einer Oberflächentopographie" A. Wehmeier; Diplomarbeit 1998 an der Fachhochschule Münster, Abteilung Steinfurt im Fachbereich Chemieingenieurwesen], sowie [Patentanmeldung DE19917975]). Der aus dieser Methode bestimmbare Dispersionskoeffizient korreliert mit einem Bestimmtheitsmaß von > 0,95 mit dem lichtoptisch bestimmten Dispersionskoeffizienten, wie er zum Beispiel vom Deutschen Institut für Kautschuktechnologie e.V.,
Hannover/Deutschland bestimmt wird (H. Geisler, "Bestimmung der Mischgüte, präsentiert auf dem DIK-Workshop, 27.-28. November 1997, Hannover/Germany). Im hier vorliegenden Fall wird jedoch nicht der Dispersionkoeffizient angegeben, sondern die ebenfalls in dieser Methode beschriebene Peakfläche (in %). Dabei gilt, dass die Dispersion umso besser ist, je kleiner die Peakfläche ist.

Die Tabelle 5 zeigt die Ergebnisse der gummitechnischen Prüfung in Naturkautschuk. Die Vulkanisationszeit der Mischungen beträgt 15 Minuten bei 150°C.

Tabelle 5

| Kautschukmischung | | Vergleichskautschukmischung 1 | Erfindungsgemäße Kautschukmischung 1 |
|---|---|---|---|
| Kautschukmischung enthaltend | | Ruß A | Ruß B |
| Zugversuch am Ring 1 | | | |
| Zugfestigkeit | MPa | 20,0 | 18, 9 |
| 100% Modul | MPa | 2, 6 | 2, 6 |
| 300% Modul | MPa | 13, 6 | 13,3 |
| Bruchdehnung | % | 456 | 437 |
| | | | |
| Shore A Härte | - | 61 | 62 |
| Viskoelastische Eigenschaften | | | |
| Goodrich Flexometer 0,175 inch/2 h Einstichtemperatur | °C | 70 | 67 |
| Dispersion | | | |
| Peakfläche | % | 2,3 | 0, 8 |

Die gummitechnische Daten in Tabelle 5 zeigen, dass die erfindungsgemäße Kautschukmischung 1, die den PAH-armen Ruß enthält, ein vergleichbar gutes anwendungstechnisches Wertebild wie die Vergleichskautschukmischung 1, die einen standardmäßigen Ruß enthält, aufweist. Darüber hinaus ist die Dispersion in der erfindungsgemäßen Kautschukmischung 1 verbessert, was durch die geringere Peakfläche gezeigt wird.

Beispiel 2 (Kautschukmischung auf Basis EPDM)

Die für die EPDM Mischungen verwendete Rezeptur ist in der folgenden Tabelle 6 angegeben.

Tabelle 6:

| Stufe 1 | |
|---|---|
| Buna® EP G 5455 | 150 |
| Ruß | 130 |
| Stearinsäure | 2 |
| ZnO | 5 |
| Lipoxol® 4000 | 2 |
| Sunpar 150 | 50 |
| | |
| Stufe 2 | |
| Vulkacit® Merkapto C | 1 |
| Rhenocure® TP/S | 2 |
| Mahlschwefel | 1,5 |
| Perkacit TBZTD-PDR-D | 1,2 |

Bei Buna® EP G 5455 handelt es um einen mit 50phr paraffinischem Öl verstreckten EPDM Kautschuk der Firma Lanxess AG. Bei Lipoxol® 4000 handelt es sich um Polyethylenglykol mit einem Molekulargewicht von 4000g/mol, erhältlich bei der Sasol Deutschland GmbH. Bei Sunpar 150 handelt es sich um mineralisches, paraffinisches Verfahrensöl von Sun Oil Company.

Bei dem Vulkanisationsbeschleuniger Vulkacit® Merkapto C handelt es sich um MBT, erhältlich bei der Lanxess AG. Bei dem Vulkanisationsbeschleuniger Rhenocure® TP/S handelt es sich um Zinkdibutyldithiophosphat (ZDBP), erhältlich bei der RheinChemie. Bei dem Vulkanisationsbeschleuniger Perkacit TBZTD-PDR-D handelt es sich um TBZTD der Firma Flexsys N.V..

Die Kautschukmischungen werden in einem Innenmischer entsprechend der Mischvorschrift in Tabelle 7 hergestellt.

Tabelle 7

| Stufe 1 | |
|---|---|
| *Einstellungen* | |
| Mischaggregat | Werner und Pfleiderer GK 1,5E |
| Drehzahl | 40 upm |
| Stempeldruck | 5,5 bar |
| Leervolumen | 1,58 l |
| Füllgrad | 0,55 |
| Durchflusstemperatur | 50 °C |
| | |
| *Mischvorgang* | |
| 0 bis 1 min | Polymer |
| 1 bis 3 min | Ruß, ZnO, Stearinsäure, Lipoxol, Sunpar 150 |
| 3 min | säubern |
| 3 bis 4 min | mischen und ausfahren |
| | |
| Batchtemperatur | 80 - 120°C |

(fortgesetzt)

| Stufe 1 | |
|---|---|
| Lagerung | 24 h bei Raumtemperatur |
| | |
| **Stufe 2** | |
| *Einstellungen* | |
| Mischaggregat | Werner und Pfleiderer GK 1,5E |
| Drehzahl | 40 upm |
| Stempeldruck | 5,5 bar |
| Leervolumen | 1,58 l |
| Füllgrad | 0,53 |
| Durchflusstemperatur | 50 °C |
| | |
| *Mischvorgang* | |
| 0 bis 1 min | Batch Stufe 1 |
| 1 bis 2 min | Beschleuniger, Schwefel |
| 2 min | ausfahren und auf Labormischwalzwerk Troester WNU 1 |
| | (Durchmesser 150 mm, Länge 350 mm, |
| | Durchflusstemperatur 40/50°C, UPM 17/21) |
| | Fell bilden |
| | Homogenisieren: |
| | 3* links, 3* rechts einschneiden und umklappen sowie |
| | 6* bei weitem Walzenspalt (6 mm) und |
| | 6* bei engem Walzenspalt (3 mm) stürzen |
| | Fell ausziehen. |
| Batchtemperatur | < 110°C |

Die Tabelle 8 zeigt die Ergebnisse der gummitechnischen Prüfung. Die Vulkanisationszeit der Mischungen beträgt 10 Minuten bei 170°C.

Tabelle 8

| Kautschukmischung | | Vergleichskautschukmischung 2 | Erfindungsgemäße Kautschukmischung 2 |
|---|---|---|---|
| Kautschukmischung enthaltend | | Ruß A | Ruß B |
| Zugversuch am Stab 2 | | | |
| Zugfestigkeit | MPa | 14,5 | 13,2 |
| 100% Modul | MPa | 4,3 | 3,8 |
| 300% Modul | MPa | 11,4 | 9,4 |
| Bruchdehnung | % | 417 | 441 |
| | | | |
| Shore A Härte | - | 63 | 61 |

(fortgesetzt)

| Kautschukmischung | | Vergleichskautschukmischung 2 | Erfindungsgemäße Kautschukmischung 2 |
|---|---|---|---|
| Dispersion | | | |
| Peakfläche | % | 5,2 | 0,4 |

Die gummitechnische Daten in Tabelle 8 zeigen, dass die erfindungsgemäße Kautschukmischung 2, die den PAH-armen Ruß enthält, ein vergleichbar gutes anwendungstechnisches Wertebild wie die Vergleichskautschukmischung 2, die einen standardmäßigen Ruß enthält, aufweist. Darüber hinaus ist die Dispersion in der erfindungsgemäßen Kautschukmischung 2 verbessert, was durch die geringere Peakfläche gezeigt wird.

**Patentansprüche**

1. Kautschukmischung, enthaltend mindestens einen Kautschuk und mindestens einen PAH-armen Ruß, **dadurch gekennzeichnet, dass** der PAH-arme Ruß

   (A) eine lod-Zahl von 17 bis 75 mg/g,
   (B) eine STSA-Oberfläche von 36 bis 64 $m^2$/g,
   (C) ein Verhältnis lod-Zahl zu STSA-Oberfläche von > 1,06 mg/$m^2$,
   (D) eine OAN-Zahl von 60 bis 160 ml/100g,
   (E) eine COAN-Zahl von 40 bis 110 ml/100g,
   (F) einen Mode größer als 100 nm und
   (G) einen Benzo(a)pyrene Gehalt < 2 ppm

   aufweist.

2. Kautschukmischung gemäß Anspruch 1, **dadurch gekennzeichnet, dass** der Benzo(a)pyrene Gehalt des PAH-armen Rußes < 1 ppm ist.

3. Kautschukmischung gemäß Anspruch 1, **dadurch gekennzeichnet, dass** der Benzo(a)pyrene Gehalt des PAH-armen Rußes < 0,5 ppm ist.

4. Kautschukmischung gemäß Anspruch 1, **dadurch gekennzeichnet, dass** der Benzo(a)pyrene Gehalt des PAH-armen Rußes < 0,1 ppm ist.

5. Kautschukmischung gemäß einem der Ansprüche 1-4, **dadurch gekennzeichnet, dass** der enthaltene Ruß eine STSA-Oberfläche von 36 bis 50 $m^2$/g aufweist.

6. Kautschukmischung gemäß einem der Ansprüche 1- 5, **dadurch gekennzeichnet, dass** der PAH-arme Ruß eine Transmission bei 300 nm von > 45% und < 98% aufweist.

7. Kautschukmischung gemäß Anspruch 6, **dadurch gekennzeichnet, dass** der PAH-arme Ruß eine Transmission bei 300 nm von > 45% und < 95% aufweist.

8. Kautschukmischung gemäß Anspruch 6, **dadurch gekennzeichnet, dass** der PAH-arme Ruß eine Transmission bei 300 nm von > 45% und < 90% aufweist.

9. Verwendung der Kautschukmischung nach einem der Ansprüche 1-8 zur Herstellung von technischen Gummiartikeln und Fahrzeugreifen

**Claims**

1. Rubber mixture comprising at least one rubber and at least one low-PAH-content carbon black, **characterized in**

**that** the low-PAH-content carbon black has

(A) an iodine number of from 17 to 75 mg/g,
(B) an STSA surface area of from 36 to 64 m$^2$/g,
(C) an iodine number:STSA surface area ratio > 1.06 mg/m$^2$,
(D) an OAN number of from 60 to 160 ml/100 g,
(E) a COAN number of from 40 to 110 ml/100 g,
(F) a mode greater than 100 nm and
(G) benzo(a)pyrene content < 2 ppm.

2. Rubber mixture according to claim 1, **characterized in that** the benzo(a)pyrene content of the low-PAH-content carbon black is < 1 ppm.

3. Rubber mixture according to claim 1, **characterized in that** the benzo(a)pyrene content of the low-PAH-content carbon black is < 0.5 ppm.

4. Rubber mixture according to claim 1, **characterized in that** the benzo(a)pyrene content of the low-PAH-content carbon black is < 0.1 ppm.

5. Rubber mixture according to any one of claims 1 to 4, **characterized in that** the STSA surface area of the low-PAH-content carbon black is from 36 to 50 m$^2$/g.

6. Rubber mixture according to any one of claims 1 to 5, **characterized in that** the transmittance of the low-PAH-content carbon black at 300 nm is > 45% and < 98%.

7. Rubber mixture according to claim 6, **characterized in that** the transmittance of the low-PAH-content carbon black at 300 nm is > 45% and < 95%.

8. Rubber mixture according to claim 6, **characterized in that** the transmittance of the low-PAH-content carbon black at 300 nm is > 45% and < 90%.

9. Use of the rubber mixture according to any one of claims 1 to 8 for producing technical rubber items and tyres.

**Revendications**

1. Mélange de caoutchouc, contenant au moins un caoutchouc et au moins un noir de fumée pauvre en hydrocarbures aromatiques polycycliques (HAP), **caractérisé en ce que** ce noir de fumée pauvre en HAP présente

A) un indice d'iode de 17 à 75 mg/g,
B) une aire spécifique par épaisseur statistique (STSA) de 36 à 64 m$^2$/g,
C) un rapport de l'indice d'iode à l'aire spécifique STSA supérieur à 1,06 mg/m$^2$,
D) un indice d'absorption d'huile (OAN) de 60 à 160 ml/100 g,
E) un indice d'absorption d'huile après compression (COAN) de 40 à 110 ml/100 g,
F) un mode supérieur à 100 nm,
G) et une teneur en benzo[a]pyrène inférieure à 2 ppm.

2. Mélange de caoutchouc conforme à la revendication 1, **caractérisé en ce que** la teneur en benzo[a]pyrène du noir de fumée pauvre en HAP est inférieure à 1 ppm.

3. Mélange de caoutchouc conforme à la revendication 1, **caractérisé en ce que** la teneur en benzo[a]pyrène du noir de fumée pauvre en HAP est inférieure à 0,5 ppm.

4. Mélange de caoutchouc conforme à la revendication 1, **caractérisé en ce que** la teneur en benzo[a]pyrène du noir de fumée pauvre en HAP est inférieure à 0,1 ppm.

5. Mélange de caoutchouc conforme à l'une des revendications 1 à 4, **caractérisé en ce que** le noir de fumée contenu présente une aire spécifique STSA de 36 à 50 m$^2$/g.

6. Mélange de caoutchouc conforme à l'une des revendications 1 à 5, **caractérisé en ce que** le noir de fumée pauvre en HAP présente un taux de transmission à 300 nm supérieur à 45 % et inférieur à 98 %.

7. Mélange de caoutchouc conforme à la revendication 6, **caractérisé en ce que** le noir de fumée pauvre en HAP présente un taux de transmission à 300 nm supérieur à 45 % et inférieur à 95 %.

8. Mélange de caoutchouc conforme à la revendication 6, **caractérisé en ce que** le noir de fumée pauvre en HAP présente un taux de transmission à 300 nm supérieur à 45 % et inférieur à 90 %.

9. Utilisation d'un mélange de caoutchouc conforme à l'une des revendications 1 à 8 pour la fabrication d'articles techniques en gomme et de pneus de véhicules automobiles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4138471 A
- WO 03021017 A
- US 6440628 B
- SU 899589
- EP 1102127 A
- US 6087434 A
- US 6599496 B
- WO 2008058114 A
- DE 19917975

**In der Beschreibung aufgeführte Nicht-Patentliteratur**

- **BORM PJ.** Formation of PAH-DNA adducts after in vivo and vitro exposure of rats and lung cells to different commercial carbon blacks. *Toxicology and Applied Pharmacology,* 01. Juni 2005, vol. 205 (2), 157-167
- **W. HOFMANN.** Kautschuktechnologie. Genter Verlag, 1980
- **W. HOFMANN.** Rubber Technology Handbook. Hanser Verlag, 1994